# EUROPÄISCHE PATENTSCHRIFT

(11) **EP 1 498 017 B1**
(45) Veröffentlichungstag und Bekanntmachung des Hinweises auf die Patenterteilung: **24.01.2007**
(21) Anmeldenummer: 04103298.8
(22) Anmeldetag: 12.07.2004
(51) Int. Cl.: A01D 34/17

(54) **Mähwerksbalken mit einem Niederhalter**
Mower beam with holding-down device
Barre de fauchage avec élément presseur

(30) Priorität: 16.07.2003 US 620657
(43) Veröffentlichungstag der Anmeldung: 19.01.2005
(73) Patentinhaber: DEERE & COMPANY, Moline, Illinois 61265-8098 (US)
(72) Erfinder: Lolley, David Ray, Bettendorf, Iowa 52722 (US)
(74) Vertreter: Holst, Sönke

(56) Entgegenhaltungen:
- US-A- 870 358
- US-A- 2 269 527
- US-A- 3 199 279
- US-A1- 2002 035 827

## Beschreibung

Die Erfindung betrifft einen Mähwerksbalken mit einem Trägerbalken, an dem eine Messerführung befestigt ist, in der ein Messerbalken mit daran angebrachten Messern verschiebbar angeordnet ist, einem Niederhalter, der einen ersten Abschnitt und einen zweiten Abschnitt aufweist, wobei der erste Abschnitt am Trägerbalken befestigt ist und der zweite Abschnitt die Messer des Messerbalkens berührt, und mit einem eine Mutter und eine Schraube umfassenden Verstellzusammenbau zur Verstellung der Position des zweiten Abschnitts gegenüber dem ersten Abschnitt, wobei sich der Verstellzusammenbau zwischen dem ersten Abschnitt und dem zweiten Abschnitt erstreckt und der Kopf der Schraube am ersten Abschnitt anliegt.

Sich hin und her bewegende Mähwerksbalken werden an landwirtschaftlichen Erntemaschinen verwendet, um zu erntende Pflanzen abzumähen. Diese Mähwerksbalken umfassen in der Regel einen sich quer erstreckenden Trägerbalken, an dem eine Vielzahl an Messerführungen befestigt ist. Die Messerführungen umfassen eine Anzahl an sich längs (in Vorwärtsrichtung) erstreckenden Fingern mit Auflageplatten. Ein sich hin- und herbewegender Messerbalken ist an den Messerführungen verschiebbar befestigt. Der sich hin- und herbewegende Messerbalken ist mit einer Anzahl von Messern versehen, die mit den Auflageplatten zusammenwirken, um stehende Pflanzen in einer Scherenschnittwirkung abzuschneiden. Niederhalter werden verwendet, um die Messer im Kontakt mit den Messerführungen zu halten.

Die Niederhalter können mit Verstelleinrichtungen ausgestattet werden, um die Niederdrückkraft des Niederhalters zu steuern. Eine Verstellmutter und -schraube werden verwendet, um die Position eines zweiten Abschnitts gegenüber eines ersten Abschnitts des Niederhalters einzustellen. Ein derartiger Mähwerksbalken ist in der DE 198 50 261 A, der US 5 979 152 A und der US 4 012 891 A vorgeschlagen. Oberhalb der Messer befindet sich am Finger eine Schraube, die sich nach unten bis zum Niederhalter erstreckt. Diese Schraube beeinträchtigt den Gutfluss.

Ein Mähwerksbalken eingangs genannter Art ist in der US 2 269 527 A offenbart. Ein Niederhalter umfasst einen ersten Abschnitt, der am Trägerbalken anliegt und einen zweiten, sich vom ersten Abschnitt zunächst nach hinten und dann bogenförmig nach vorn erstreckenden Abschnitt, der am Messer anliegt. Der erste Abschnitt weist eine konische Bohrung auf, in der passend ein Kopf einer sich nach oben erstreckenden Schraube anliegt, die sich nach oben und durch eine Öffnung im zweiten Abschnitt erstreckt. Eine auf das Gewinde der Schraube aufgeschraubte Mutter liegt von oben her am zweiten Abschnitt an. Als nachteilig ist anzusehen, dass das oberhalb des konischen Abschnitts der Bohrung liegende Material recht dünn ist, so dass die Schraube bei stärkeren Zugkräften die Öffnung verformt oder zerstört.

Die der Erfindung zu Grunde liegende Aufgabe wird darin gesehen, einen verbesserten Mähwerksbalken und Niederhalter bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Der Mähwerksbalken weist einen Trägerbalken auf. An dem Trägerbalken sind Messerführungen befestigt. In den Messerführungen ist ein Messerbalken mit daran befestigten Messern verschiebbar gelagert. Er bewegt sich im Betrieb in seitlicher Richtung in den Messerführungen hin und her. Ein Niederhalter für den Messerbalken weist einen ersten und einen zweiten Abschnitt auf. Der Niederhalter kann in Form eines Rahmens und aus Metallblech gestaltet sein. Der erste Abschnitt des Niederhalters ist am Trägerbalken befestigt. Der zweite Abschnitt des Niederhalters liegt an den Messern an, insbesondere über eine Verschleißplatte, die direkt die sich hin- und herbewegenden Messer berührt und sie nach unten gegen eine Auflageplatte der Messerführung drückt. Die relative Position der Abschnitte voneinander wird durch einen Verstellzusammenbau justiert, der sich zwischen dem ersten und dem zweiten Abschnitt erstreckt. Am ersten Abschnitt ist ein Stegabschnitt gebildet, der zur Aufnahme einer Schraube des Verstellzusammenbaus dient und an dem der Kopf der Schraube anliegt. Eine Mutter liegt an der anderen Seite des zweiten Abschnitts an und dient zur Verstellung der Position des zweiten Abschnitts.

Auf diese Weise erreicht man eine kompakte und geschützte Anbringung des Verstellzusammenbaus, der den Erntegutfluss wenig beeinträchtigt.

Die Schraube durchdringt vorzugsweise den zweiten Abschnitt. Der erste Abschnitt kann am erhöhten Stegabschnitt mit einem sich längs (d. h. nach vorn) erstreckenden Zapfen ausgestattet sein, der auf dem rückwärtigen Bereich der Messer aufliegt, um sie nach unten zu drücken. Außerdem kann eine Führungsfläche am ersten Abschnitt vorgesehen sein, um den Messerbalken zu berühren und/oder zu führen.

Weiterhin kann der zweite Abschnitt mit einer Verschleißplatte ausgestattet werden, die eine Kontaktfläche aufweist, die größer als die Querschnittsfläche des zweiten Abschnitts ist. Der zweite Abschnitt kann außerdem durch sich längs erstreckende Rippen versteift werden, die in dem Blechmetall geformt sind, das den Niederhalter bildet.

In den Zeichnungen ist ein nachfolgend näher beschriebenes Ausführungsbeispiel der Erfindung dargestellt. Es zeigt:
- Fig. 1: einen seitlichen Querschnitt durch einen Mähwerksbalken mit einem erfindungsgemäßen Niederhalter,
- Fig. 2: eine Ansicht des Niederhalters von unten,
- Fig. 3: eine Draufsicht auf den Niederhalter.

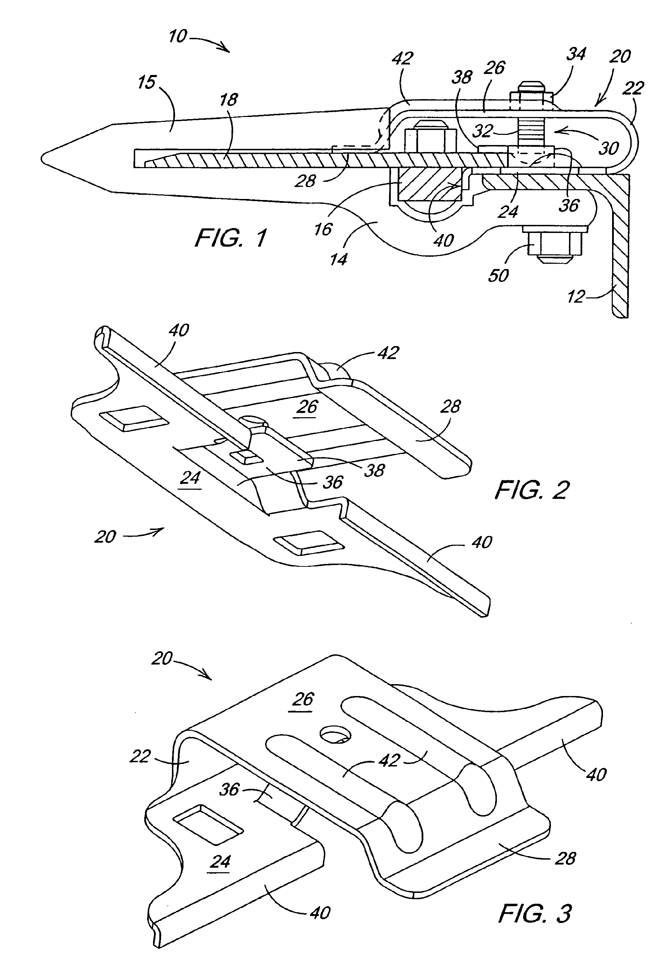

Die Figur 1 zeigt einen aus seitlicher Richtung aufgenommenen Querschnitt durch einen sich hin- und herbewegenden Mähwerksbalken 10. Die stationären Teile des Mähwerksbalkens 10 umfassen einen sich quer erstreckenden, stationären Trägerbalken 12, an dem eine Vielzahl an Messerführungen 14 befestigt ist. Jeder der Messerführungen 14 ist mit einer Vielzahl sich längs erstreckender Finger 15 ausgestattet. Die sich bewegenden Teile des Mähwerksbalkens 10 umfassen einen sich quer erstreckenden, sich hin- und herbewegenden Messerbalken 16 und eine Vielzahl an Messern 18, die an dem sich hin- und herbewegenden Messerbalken 16 befestigt sind. Der Messerbalken 16 ist verschiebbar in einem Kanal positioniert, der in den Messerführungen 14 geformt ist. Die Messer 18 sind an dem Messerbalken 16 angeschraubt. Die hin- und hergehende Bewegung der Messer 18 gegenüber Auflageplatten, die durch die Finger 15 gebildet werden, ergibt eine Scherenschnittwirkung zum Abschneiden von Erntegut, das mit dem Mähwerksbalken 10 in Wechselwirkung tritt. Die genannten Richtungsangaben, wie längs und quer, beziehen sich auf die Vorwärtsrichtung, in der ein an einer Erntemaschine, insbesondere am Schneidwerk eines Mähdreschers, angebrachter Mähwerksbalken 10 über ein Feld bewegt wird.

Um den sich hin- und herbewegenden Messerbalken 16 und die damit verbundenen Messer 18 in ihrer richtigen Position gegenüber der Messerführung 14 zu halten, ist der Mähwerksbalken 10 mit einem Niederhalter 20 ausgestattet. Der Niederhalter 20 umfasst einen Rahmen 22 aus Metallblech, der einen ersten Abschnitt 24 und einen zweiten Abschnitt 26 aufweist. Der zweite Abschnitt 26 ist mit einem Niederdrückzusammenbau ausgestattet, der durch eine Verschleißplatte 28 gebildet ist, die eine vergrößerte Kontaktfläche aufweist, mit der sie die sich hin- und herbewegenden Messer 18 direkt berührt. Ein Verstellzusammenbau 30 wird verwendet, um die Position des zweiten Abschnitts 26 gegenüber dem ersten Abschnitt 24 und damit die Andrückkraft bzw. -wirkung des Niederhalters 20 zu verändern. Der Verstellzusammenbau 30 umfasst eine Schraube 32, die sich vom ersten Abschnitt 24 durch den zweiten Abschnitt 26 hindurch nach oben erstreckt, an dem sie durch eine Mutter 34 befestigt ist. Durch Drehen der Mutter 34 kann die Entfernung zwischen dem ersten Abschnitt 24 und dem zweiten Abschnitt 26 verändert werden, und damit auch die von der Verschleißplatte 28 auf die Messern 18 ausgeübte, nach unten gerichtete Kraft. Um die Schraube 32 aufzunehmen, ist der erste Abschnitt 24 mit einem erhöhten Stegabschnitt 36 versehen, durch den die Schraube 32 verläuft. Der erhöhte Stegabschnitt 36 ist mit einem in Längsrichtung vorspringenden Zapfen 38 ausgestattet, der den hinteren Bereich der sich hin- und herbewegenden Messer 18 überdeckt. Die Verschleißplatte 28 und der Zapfen 38 unterstützen die Haltung der Messer 18 in ihrer gewünschten vertikalen Position.

Der erste Abschnitt 24 ist mit einer Führungsfläche 40 versehen, die die hintere Kante des sich hin- und herbewegenden Messerbalkens 16 berührt. Außerdem ist der zweite Abschnitt 26 mit zwei sich längs erstreckenden Versteifungsrippen 42 ausgestattet, die in dem Rahmen 22 geformt sind.

Es ist anzumerken, dass die Befestigungsschrauben 50, die zum Befestigen der Messerführungen 14 am Trägerbalken 12 verwendet werden, auch den Niederhalter 20 am Trägerbalken 12 fixieren.

## Patentansprüche

1. Mähwerksbalken (10) mit einem Trägerbalken (12), an dem eine Messerführung (14) befestigt ist, in der ein Messerbalken (16) mit daran angebrachten Messern (18) verschiebbar angeordnet ist, einem Niederhalter (20), der einen ersten Abschnitt (24) und einen zweiten Abschnitt (26) aufweist, wobei der erste Abschnitt am Trägerbalken (12) befestigt ist und der zweite Abschnitt (26) die Messer (18) des Messerbalkens (16) berührt, und mit einem eine Mutter (34) und eine Schraube (32) umfassenden Verstellzusammenbau (30) zur Verstellung der Position des zweiten Abschnitts (26) gegenüber dem ersten Abschnitt (24), wobei sich der Verstellzusammenbau (30) zwischen dem ersten Abschnitt (24) und dem zweiten Abschnitt (26) erstreckt und der Kopf der Schraube am ersten Abschnitt (24) anliegt, **dadurch gekennzeichnet, dass** am ersten Abschnitt (24) ein gegenüber dem am Trägerbalken (12) anliegenden Bereich des ersten Abschnitts (24) erhöhter Stegabschnitt (36) gebildet ist, durch den sich die Schraube (32) erstreckt und an dem ihr Kopf anliegt.

2. Mähwerksbalken (10) nach Anspruch 1, **dadurch gekennzeichnet, dass** sich die Schraube (32) durch den zweiten Abschnitt (26) erstreckt.

3. Mähwerksbalken (10) nach Anspruch 1 oder 2, **dadurch gekennzeichnet, dass** der erhöhte Stegabschnitt (36) einen sich nach vorn erstreckenden Zapfen (38) aufweist, der an dem hinteren Bereich der Messer (18) aufliegt.

4. Mähwerksbalken (40) nach einem der Ansprüche 1 bis 3, **dadurch gekennzeichnet, dass** der erste Abschnitt (24) mit einer Führungsfläche (40) versehen ist, die den Messerbalken (16) berührt und/oder führt.

5. Mähwerksbalken (40) nach einem der Ansprüche 1 bis 4, **dadurch gekennzeichnet, dass** der zweite Abschnitt (26) mit sich längs erstreckenden Versteifungsrippen (42) ausgestattet ist.

6. Mähwerksbalken nach einem der Ansprüche 1 bis 5, **dadurch gekennzeichnet, dass** sich der erste Abschnitt (24) vom Trägerbalken (12) nach hinten und in einem Bogen nach oben erstreckt, und dort in den zweiten Abschnitt (26) übergeht, der sich von dort nach vorn bis zu den Messern (18) erstreckt, und dass sich der Verstellzusammenbau (30) vertikal zwischen dem dem Trägerbalken (12) benachbarten Bereich des ersten Abschnitts (24) und dem Bereich des zweiten Abschnitts (26) erstreckt, der sich vom dem Übergang zum ersten Abschnitt (24) nach vorn erstreckt.

## Claims

1. A cutter bar (10) with a support bar (12) on which is fixed a knife guide (14) in which a sickle bar (16) with knives (18) fitted thereon is slidably disposed, a hold-down (20) which has a first section (24) and a second section (26), wherein the first section is fixed on the support bar (12) and the second section (26) contacts the knives (18) of the sickle bar (16), and with and adjusting assembly (30) comprising a nut (34) and a screw (32) for adjusting the position of the second section (26) relative to the first section (24), wherein the adjusting assembly (30) extends between the first section (24) and the second section (26) and the head of the screw bears on the first section (24), **characterized in that** a web section (36) is formed on the first section (24), raised relative to the region of the first section (24) bearing on the support bar (12), through which web section the screw (32) extends and on which its head bears.

2. A cutter bar (10) according to claim 1, **characterized in that** the screw (32) extends through the second section (26).

3. A cutter bar (10) according to claim 1 or 2, **characterized in that** the raised web section (36) has a forwardly extending tongue (38) which bears on the rear region of the knife (18).

4. A cutter bar (10) according to any of claims 1 to 3, **characterized in that** the first section (24) is provided with a guide surface (40) which contacts and/or guides the sickle bar (16).

5. A cutter bar (10) according to any of claims 1 to 4, **characterized in that** the second section (26) is provided with longitudinally extending stiffening ribs (42).

6. A cutter bar according to any of claims 1 to 5, **characterized in that** the first section (24) extends from the support bar (12) to the rear and upwards in an arc and passes over there into the second section (26), which extends forwards from thence up to the knives (18), and **in that** the adjusting assembly (30) extends vertically between the region of the first section (24) adjacent the support bar (12) and the region of the second section (26) which extends from the transition to the first section (24).

## Revendications

1. Barre de coupe (10) comportant une barre support (12), contre laquelle est fixé un guidage des lames de coupe (14), dans lequel est agencé de manière mobile un porte-lames (16) avec les lames de coupe (18) fixées contre celui-ci, un élément de retenue (20), qui comporte une première partie (24) et une deuxième partie (26), la première partie (24) étant fixée contre la barre support (12) et la deuxième partie (26) entrant en contact avec les lames de coupe (18) du porte-lames (16), et comportant un ensemble de réglage (30), qui est formé par un écrou (34) et une vis (32) et qui est destiné à régler la position de la deuxième partie (26) par rapport à la première partie (24), l'ensemble de réglage (30) s'étendant entre la première partie (24) et la deuxième partie (26), et la tête de la vis (32) étant en appui sur la première partie (24), **caractérisée en ce que** sur la première partie (24) est formée une branche (36), qui est surélevée par rapport à la zone de la première partie (24), en appui sur la barre support (12), et à travers laquelle passe la vis (32) et contre laquelle la tête de vis vient en appui.

2. Barre de coupe (10) selon la revendication 1, **caractérisée en ce que** la vis (32) passe à travers la deuxième partie (26).

3. Barre de coupe (10) selon la revendication 1 ou 2, **caractérisée en ce que** la branche (36) surélevée comporte un tenon (38) qui s'étend vers l'avant et qui est en appui sur la zone arrière des lames de coupe (18).

4. Barre de coupe (10) selon l'une quelconque des revendications 1 à 3, **caractérisée en ce que** la première partie (24) est munie d'une surface de guidage (40), qui entre en contact avec le porte-lames (16) et/ou guide celui-ci.

5. Barre de coupe (10) selon l'une quelconque des revendications 1 à 4, **caractérisée en ce que** la deuxième partie (26) est munie de nervures de raidissement (42) qui sont orientées dans le sens longitudinal.

6. Barre de coupe (10) selon l'une quelconque des revendications 1 à 5, **caractérisée en ce que** la première partie (24) s'étend depuis la barre support (12) vers l'arrière et, par l'intermédiaire d'une courbe, vers le haut, et à cet emplacement se prolonge par la deuxième partie (26), qui s'étend à partir de là vers l'avant jusqu'aux lames de coupe (18), et **en ce que** l'ensemble de réglage (30) s'étend verticalement entre la zone, voisine de la barre support (12), sur la première partie (24) et la zone de la deuxième partie (26) qui s'étend vers l'avant à partir de la transition avec la première partie (24).
